# EUROPEAN PATENT APPLICATION

(11) **EP 3 693 573 A1**
(43) Date of publication of application: **12.08.2020**
(21) Application number: 20155711.3
(22) Date of filing: 05.02.2020
(51) Int. Cl.: F02C 6/20, F02C 9/58, B64C 11/30

(54) **SYSTEM AND METHOD FOR CONTROLLING PROPELLER-DRIVEN AIRCRAFT**

(30) Priority: 06.02.2019 US 201916269534
(71) Applicant: Pratt & Whitney Canada Corp., Longueuil, Québec J4G 1A1 (CA)
(72) Inventor: LISIO, Carmine, Longueuil, Québec J4G 1A1 (CA); FORTIN, Frederic, Longueuil, Québec J4G 1A1 (CA)
(74) Representative: Dehns

(57) **Abstract**

A method and a system are provided for controlling a propeller-driven aircraft, the aircraft powered by at least one engine (110) having at least one propeller (120) associated therewith. At least one control input for the at least one engine (110) is received at an engine controller (210) for the at least one engine (110). The engine controller (210) determines, based on the at least one control input, a setpoint for a rotational speed of the at least one propeller (120) and outputs, to a propeller controller (220) for the at least one propeller (120), a control signal comprising instructions to adjust the rotational speed of the at least one propeller (120) to the setpoint.

## Description

### TECHNICAL FIELD

The present disclosure relates generally to engine control, and, more particularly, to engine and propeller control in aircraft.

### BACKGROUND OF THE ART

A propeller-driven aircraft powerplant consists of two principal and distinct components: an engine and a propeller. An engine control system is used to modulate the power output of the engine, for example by controlling fuel flow to the engine. The power output from the engine is principally used to drive the propeller. Similarly, a propeller control system is used to modulate the thrust produced by the propeller, for example by changing a propeller rotational speed and/or a propeller blade pitch.

In traditional propeller-driven aircraft, each of the engine control system and the propeller control system is operated by a pilot or other operator using a respective lever for each of the powerplant components. Thus, a throttle lever is used to set a desired engine power output and a condition lever is used to set a desired propeller rotational speed and blade pitch angle, thereby modulating the thrust output. However, the presence of multiple levers for each principal powerplant component can lead to additional workload for the pilot. As such, there is room for improvement.

### SUMMARY

In accordance with a first aspect, there is provided a method for controlling a propeller-driven aircraft, the aircraft powered by at least one engine having at least one propeller associated therewith. The method comprises at an engine controller for the at least one engine, receiving at least one control input for the at least one engine, determining, based on the at least one control input, a setpoint for a rotational speed of the at least one propeller, and outputting, to a propeller controller for the at least one propeller, a control signal comprising instructions to adjust the rotational speed of the at least one propeller to the setpoint.

In an embodiment according to the above, receiving the at least one control input comprises receiving a lever position for a throttle lever associated with the at least one engine.

In an embodiment according to any of the previous embodiments, the setpoint is determined from a mapping of the rotational speed of the at least one propeller as a function of the lever position.

In an embodiment according to any of the previous embodiments, receiving the at least one control input comprises receiving a power rating selection from a rating panel associated with the at least one engine.

In an embodiment according to any of the previous embodiments, the setpoint is determined from a mapping of the rotational speed of the at least one propeller as a function of the power rating selection.

In an embodiment according to any of the previous embodiments, the control signal is output to the propeller controller as a synthesized control lever angle signal derived from the at least one control input.

In accordance with another aspect, there is provided a system for controlling a propeller-driven aircraft, the aircraft powered by at least one engine having at least one propeller associated therewith. The system comprises a propeller controller for the at least one propeller, and an engine controller for the at least one engine, the engine controller comprising at least one processing unit and at least one non-transitory computer-readable memory having stored thereon program instructions executable by the at least one processing unit for receiving at least one control input for the at least one engine, determining, based on the at least one control input, a setpoint for a rotational speed of the at least one propeller, and outputting, to the propeller controller, a control signal comprising instructions to adjust the rotational speed of the at least one propeller to the setpoint.

In an embodiment according to the above, the program instructions are executable by the at least one processing unit for receiving the at least one control input comprising receiving a lever position for a throttle lever associated with the at least one engine.

In an embodiment according to any of the previous embodiments, the program instructions are executable by the at least one processing unit for determining the setpoint a mapping of the rotational speed of the at least one propeller as a function of the lever position.

In an embodiment according to any of the previous embodiments, the program instructions are executable by the at least one processing unit for receiving the at least one control input comprising receiving a power rating selection from a rating panel associated with the at least one engine.

In an embodiment according to any of the previous embodiments, the program instructions are executable by the at least one processing unit for determining the setpoint from a mapping of the rotational speed of the at least one propeller as a function of the power rating selection.

In an embodiment according to any of the previous embodiments, the program instructions are executable by the at least one processing unit for outputting the control signal to the propeller controller as a synthesized control lever angle signal derived from the at least one control input.

In accordance with yet another aspect, there is provided a non-transitory computer readable medium having stored thereon program code executable by at least one processor for receiving, at an engine controller for at least one engine powering a propeller-driven aircraft, at least one control input for the at least one engine, determining, at the engine controller, based on the at least one control input, a setpoint for a rotational speed of at least one propeller associated with the at least one engine, and outputting, at the engine controller, to a propeller controller for the at least one propeller, a control signal comprising instructions to adjust the rotational speed of the at least one propeller to the setpoint.

Features of the systems, devices, and methods described herein may be used in various combinations, in accordance with the embodiments described herein.

### BRIEF DESCRIPTION OF THE DRAWINGS

Reference is now made to the accompanying figures in which:
Figure 1 is a schematic cross-sectional view of a gas turbine engine and propeller, in accordance with an illustrative embodiment;
Figure 2 is a block diagram of an example powerplant control system configuration, in accordance with an illustrative embodiment;
Figure 3 is a graphical representation of an example mapping of propeller rotational governing speed as a function of power lever position, in accordance with an illustrative embodiment;
Figure 4 is a graphical representation of an example mapping of propeller rotational governing speed as a function of power rating selection, in accordance with an illustrative embodiment;
Figure 5 is a schematic diagram of an example computing system for implementing the powerplant control system of Figure 2, in accordance with an illustrative embodiment; and
Figure 6 is a flowchart illustrating an example method for controlling a propeller-driven aircraft, in accordance with an illustrative embodiment.

It will be noted that throughout the appended drawings, like features are identified by like reference numerals.

### DETAILED DESCRIPTION

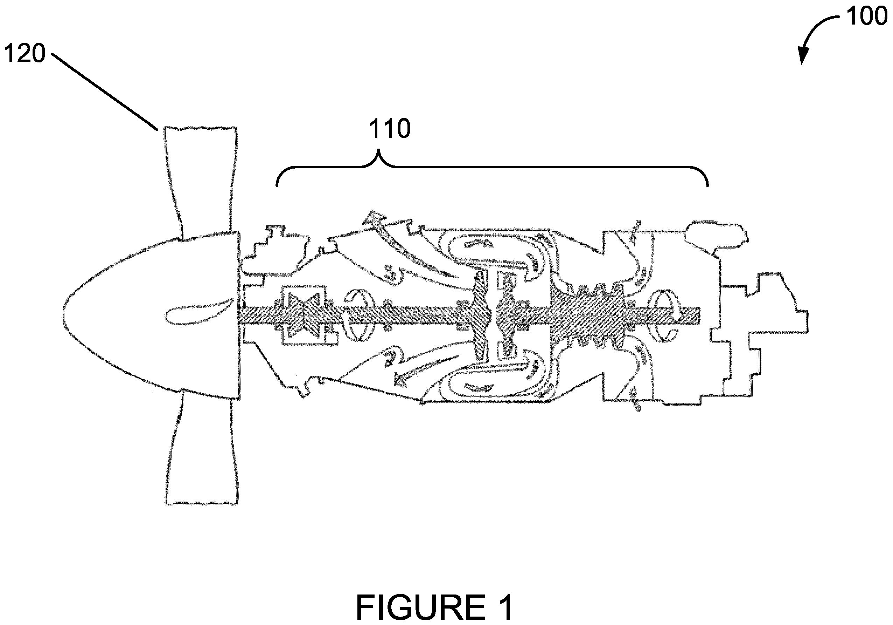

With reference to Figure 1, there is illustrated a turbopropeller powerplant 100 for an aircraft of a type preferably provided for use in subsonic flight, generally comprising an engine 110 and a propeller 120. The propeller 120 converts rotary motion from a shaft of the engine 110 to provide propulsive force for the aircraft, also known as thrust. The powerplant 100 of Figure 1 is a turboprop, but the engine 110 could also be any other type of engine mated to a propeller 120, such as a piston engine, and the like.

Operation of the engine 110 and of the propeller 120 can be regulated by a pilot or other operator by way of various powerplant controls. Traditionally, a turbopropeller-driven aircraft is provided with a throttle lever (also referred to as a power lever), which is used to regulate the output power of the engine 110, and a condition lever, which is used to regulate the propeller rotational speed and blade pitch angle thereby modulating thrust produced by the propeller 120. For instance, traditionally, the aircraft can include one throttle lever and one condition lever per powerplant 100. For example, a twin turbopropeller aircraft having two separate powerplants 100 can have two throttle levers and two condition levers.

As will be discussed further below, the present disclosure considers to replace the traditional condition lever by a control input (also referred to herein as a synthesized condition lever angle (CLA)) that is derived by a controller of the engine 110 and which corresponds to a setpoint defining the rotational governing speed of the propeller 120. The synthesized CLA (i.e. the setpoint) is transmitted by the engine controller to a controller of the propeller 140 so that the propeller governing speed can be set accordingly. In this manner, the traditional condition lever input may be eliminated.

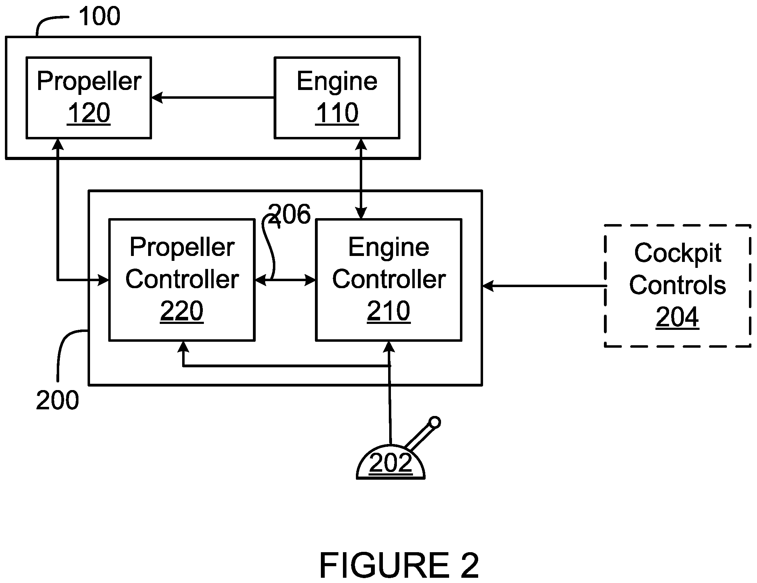

With reference to Figure 2, a powerplant control system (PCS) is shown. PCS 200 is configured for controlling operation of an aircraft powerplant 100 having an engine 110 and a propeller 120. PCS 200 is configured for receiving input from a throttle lever 202, which is associated with the powerplant 100. Optionally, the PCS 200 is further configured for receiving additional input from cockpit controls 204. As will be discussed further below, the input received from the throttle lever 202, and optionally from the cockpit controls 204, is used to control both the output power of the engine 110 and the thrust produced by the propeller 120. The input received from the throttle lever 202, and optionally from the cockpit controls 204, is referred to herein as engine control input.

The throttle lever 202 provides to the PCS 200 a lever position (also referred to herein as a lever angle), for example based on the angle of the lever 202 vis-à-vis a predetermined reference position. The lever position is indicative of a requested engine power for the engine 110. In addition, in some embodiments, the cockpit controls 204 include buttons, switches, dials, or other discrete-type input mechanisms which may be located on or proximate the throttle lever 202 and which can provide additional input to the PCS 200. For example, the discrete-type input mechanisms can provide information regarding the propeller reference speed, fuel on/off, propeller feather/unfeather, and the like. The lever position, and optionally the additional input from the cockpit controls 204, can be provided to the PCS 200 using any suitable signalling protocol and over any suitable communication medium. In some embodiments, the PCS 200 receives the lever position and the additional input via one or more wires, either as a digital signal or as an electrical analog signal. In other embodiments, the throttle lever 202 can communicate the lever position and the cockpit controls 204 can communicate the additional input to PCS 200 over one or more wireless transmission protocols.

PCS 200 includes an engine controller 210 and a propeller controller 220, which both use information from the throttle lever 202, and optionally additional input from the cockpit controls 204, as will be discussed further below. In some embodiments, the engine controller 210 is implemented as a dual-channel full-authority digital engine control (FADEC). In other embodiments, the engine controller 210 is implemented as two separate single-channel FADECs. Additionally, in some embodiments, the propeller controller 220 is implemented as a dual-channel propeller electronic control (PEC) unit, or as two single-channel PEC units, or any suitable combination thereof. In some embodiments, the additional inputs provided by the cockpit controls 204 can be provided via one or more engine interface cockpit units.

For the sake of simplicity, a single PCS 200 controlling operation of a single powerplant 100 is described and illustrated herein. It should however be understood that this is for illustrative purposes only and that the present disclosure considers aircraft having multiple powerplants, and accordingly multiple PCS configured to perform similar operations to PCS 200. For example, a twin turbopropeller aircraft having two separate powerplants as in 100 and two PCS as in 200 may apply, each PCS configured to control operation of a respective powerplant and to receive input from a given throttle lever as in 202. Still, other embodiments may apply. It should therefore be understood that the PCS 200 may include any suitable number of engine-controller-and-propeller-controller pairs.

The engine controller 210 is indeed configured for receiving the lever position from the throttle lever 202, and optionally the additional input from the cockpit controls 204. The lever position and the additional input can be transmitted from the throttle lever 202 and from the cockpit controls 204 to the engine controller 210 in any suitable fashion and using any suitable communication protocol, as discussed above. The engine controller 210 then processes the lever position from the throttle lever 202, and any additional input from the cockpit controls 204, to determine the requested engine output power for the engine 110. Based on the requested engine output power, the engine controller 210 produces an engine control signal which is sent to the engine 110 to control the operation of the engine 110 so as to achieve the requested engine output power. In some embodiments, the engine control signal modulates a flow of fuel to the engine 110. In other embodiments, the engine control signal alters the operation of a gear system of the engine 110. Still other types of engine operation control are considered.

The engine controller 210 is also configured for processing the lever position from the throttle lever 202, and any additional input from the cockpit controls 204, to determine a setpoint (also referred to herein as a governing setpoint or a synthesized CLA) for the rotational governing speed of the propeller 120. This governing setpoint is then transmitted by the engine controller 210 to the propeller controller 220 to cause the propeller controller 220 to adjust the rotational governing speed of the propeller 120 to the governing setpoint. The propeller controller 220 is also configured for receiving the lever position directly from the throttle lever 202, in any suitable fashion and using any suitable communication protocol, as discussed above, or as sent through the engine controller 210 to the propeller controller 220. The lever position is then used by the propeller controller 220 to set a minimum allowed blade pitch angle when in flight, as a function of the lever position. The lever position is also used by the propeller controller 220 to allow for transition into and out of reverse pitch when operating on the ground, for taxiing and landing. By regulating the rotational governing speed and blade pitch angle of the propeller 120, the propeller controller 220 can in turn convert the requested engine output power into thrust.

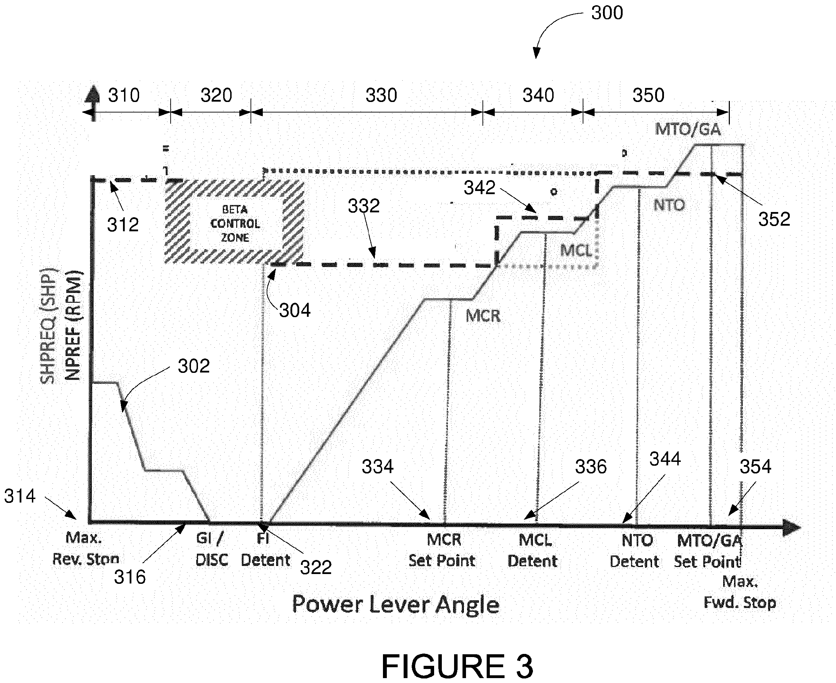

Referring now to Figure 3 in addition to Figure 2, in one embodiment, the engine controller 210 derives the propeller governing speed setpoint from the lever position obtained from the throttle lever 202. In this embodiment, the engine controller 210 uses a mapping of the propeller rotational governing speed as a function of the power lever position in order to define the governing setpoint. The mapping may be stored in memory in any suitable format, such as a lookup table 300, or the like. In particular, in the embodiment of Figure 3, a curve 302 shows the relationship between the lever position (labelled "Power Lever Angle" in Figure 3) for a throttle lever (horizontal axis), for example the throttle lever 202 of Figure 2, and the requested power (labelled "SHPREQ (SHP)" in Figure 3) for an engine (vertical axis), for example the engine 110 of Figure 2. A curve 304 shows the relationship between the lever angle for the throttle lever (horizontal axis) and the reference governing speed (labelled "NPREF (RPM)" in Figure 3) for a propeller (vertical axis), for example the propeller 120 of Figure 2. The curve 302 is aligned with the curve 304, which share a common horizontal axis, and points on the curve 302 can be mapped in relation to points on the curve 304.

The curve 304 provides an indication of the governing setpoint to be defined by the engine controller 210 at any given lever position in order in order to set a specific propeller speed. In the embodiment illustrated in Figure 3, a first section 310 of the curve 304 dictates the propeller rotational governing speed 312 between a maximum reverse position setpoint 314 and ground idle (GI) gate 316. A second section 320 of the curve 304 is implemented to set the propeller governing speed between the GI gate 316 and a flight idle (FI) gate detent 322. In this zone 320 (labelled "Beta control zone" in Figure 3), the propeller blade angle is adjusted directly for a smooth transition and the transition point can vary as a function of forward speed of the aircraft. A third section 330 of the curve 304 dictates the propeller governing speed 332 between the FI gate 322 and an intermediate point between a maximum cruise (MCR) set point 334 and a maximum climb (MCL) set point 336. A fourth section 340 of the curve 304 dictates the propeller governing speed 342 between the intermediate point between MCR set point 334 and MCL set point 336 and an intermediate point between the MCL set point 336 and a normal takeoff (NTO) detent 344. A fifth section 350 of the curve 304 dictates the propeller governing speed 352 between the intermediate point between MCL set point 336 and NTO detent 344 and a maximum forward position 354.

In some embodiments, the lever position has a plurality of transition points (also referred to herein as breakpoints), at which requested propeller governing speeds change. The breakpoints may align with aircraft flight modes or phases, or with certain emergency conditions. It can be seen that, in the example of Figure 3, the lever position has three (3) breakpoints: the FI gate 322 (at which point the governing setpoint is defined to set the propeller governing speed 332), the intermediate point between MCR set point 334 and MCL set point 336 (at which point the governing setpoint is defined to set the propeller governing speed 342), and the intermediate point between the MCL set point 336 and NTO detent 344 (at which point the governing setpoint is defined to set the propeller governing speed 352). In the embodiment of Figure 3, the governing setpoint is thus defined to set a mode of operation where three (3) propeller rotational governing speeds 332, 342, 352 are possible, depending on the lever position. For example, the three possible propeller rotational governing speeds 332, 342, 352 may be 80%, 90%, and 100%, respectively, and the corresponding governing setpoints may respectively be defined as 80 degrees, 90 degrees, and 100 degrees. It should however be understood that other suitable values for the propeller rotational governing speed (and accordingly the governing setpoint) may apply. It should also be understood that any suitable number of propeller speeds other than three (3) may be achieved.

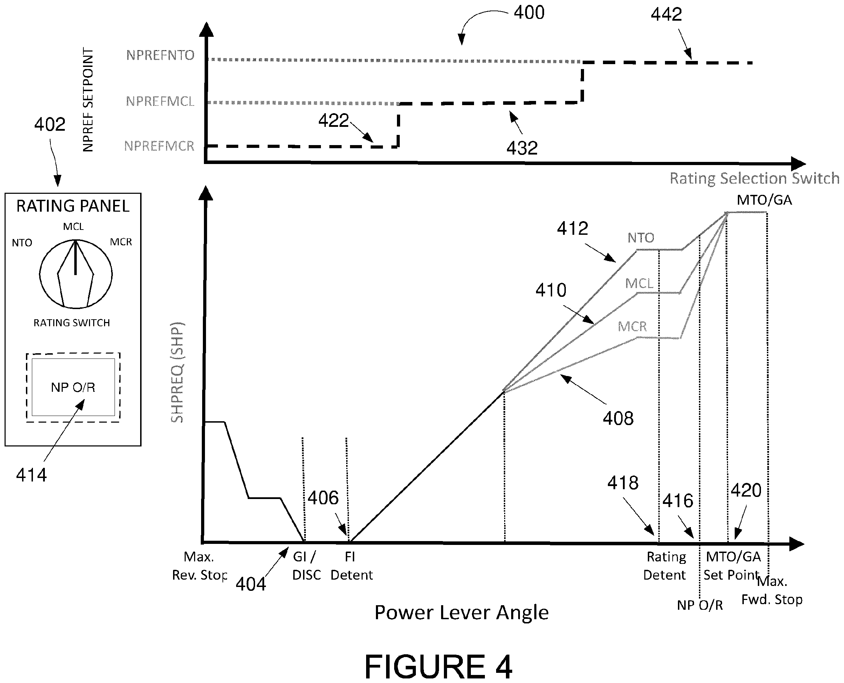

Referring now to Figure 4 in addition to Figure 2, in another embodiment, the engine controller 210 also derives the governing setpoint based on input received from cockpit controls 204, and more particularly from an engine rating selection panel 402, for a fixed lever position. The input received from the engine rating selection panel 402 illustratively indicates a desired power rating for the engine (reference 110 in Figure 2), the power rating corresponding to a given part of aircraft operation (also referred to herein as aircraft flight mode) such as take-off, cruise or landing. The governing setpoint can then be determined accordingly using a mapping of the propeller rotational governing speed as a function of the engine rating selection. The mapping may be stored in memory in any suitable format, such as a lookup table 400, or the like. In this embodiment, the engine controller 210 illustratively synchronizes the power rating and propeller governing reference speeds to align with the aircraft flight mode as selected (e.g., by the flight crew or through a setting from the avionics system communicating flight mode information to the engine controller 210).

In one embodiment, below the GI gate 404, the propeller governing speed setpoint may be determined as a function of the lever position (labelled "Power Lever Angle" in Figure 4), in a manner similar to what has been described above with reference to Figure 3. Between the GI gate 404 and the FI gate 406, the propeller blade angle may be adjusted for a smooth transition, as discussed above with reference to the "Beta control zone" of Figure 3. Above the FI gate 406, the governing setpoint may be derived based on the engine rating selection. For example, when the input received from the rating selection panel 402 indicates that the power rating is set to MCR, the propeller rotational governing speed 422 (labelled "NPREFMCR" in Figure 4) is dictated. The requested power (labelled "SHPREQ (SHP)" in Figure 4) for the engine 110 then follows curve 408. When the input received from the rating selection panel 402 indicates that the power rating is set to MCL, the propeller rotational governing speed 432 (labelled "NPREFMCL" in Figure 4) is dictated and the requested engine power setting follows curve 410. When the input received from the rating selection panel 402 indicates that the power rating is set to NTO, the propeller rotational governing speed 442 (labelled "NPREFNTO" in Figure 4) is dictated and the requested engine power setting follows curve 412. In the example of Figure 4, above the FI gate 406, the governing setpoint is thus defined to set a mode of operation where three (3) propeller rotational governing speeds 422, 432, 442 (and three (3) power settings 408, 410, 412) are possible. For example, the three possible propeller rotational governing speeds 422, 432, 442 may be 80%, 90%, and 100%, respectively, and the corresponding propeller governing speed setpoints may respectively be defined as 80 degrees, 90 degrees, and 100 degrees. It should however be understood that other suitable values for the propeller rotational governing speed (and accordingly the governing setpoint) may apply. It should also be understood that any suitable number of propeller speeds other than three (3) may be achieved.

In one embodiment, the engine controller 210 may set the propeller governing speed setpoint to a predetermined value (e.g., 100 degrees) at all times. In one embodiment, this may be achieved by selecting an override option 414 on the rating selection panel 402. In another embodiment, the governing speed setpoint may be set to the predetermined value (e.g., 100 degrees) when the lever position is above a propeller speed override (NP O/R) position 416, between a rating detent position 418 and a maximum takeoff (MTO) / go-around (GA) position 420. Setting the governing speed setpoint at 100 degrees may be desirable under certain flight conditions, such as icing, where the higher rotational speed promotes the shedding of ice on the propeller blades. Also, for multiple powerplant aircraft and in the case where one engine is inoperative, it may be desired to set the propeller governing speed setpoint at 100% to achieve the highest thrust capability. This may however be at the expense of lower noise and vibration and more efficient power to thrust conversion afforded by operating at low propeller speeds.

Referring back to Figure 2, the governing setpoint as derived by the engine controller 210 is then sent to the propeller controller 220 to inform the propeller controller 220 on required rotational speed for the propeller 120, as discussed herein above. In one embodiment, the governing setpoint is sent over a digital communication bus 206. The propeller controller 220 then generates, based on the governing setpoint, a propeller command to control operation of the propeller 120 (i.e., adjust the rotational governing speed of the propeller 120 to the governing setpoint). The propeller controller 220 may then output a propeller control signal indicative of the propeller command and send it to the propeller 120 to alter the rotational governing speed of the propeller 120 accordingly.

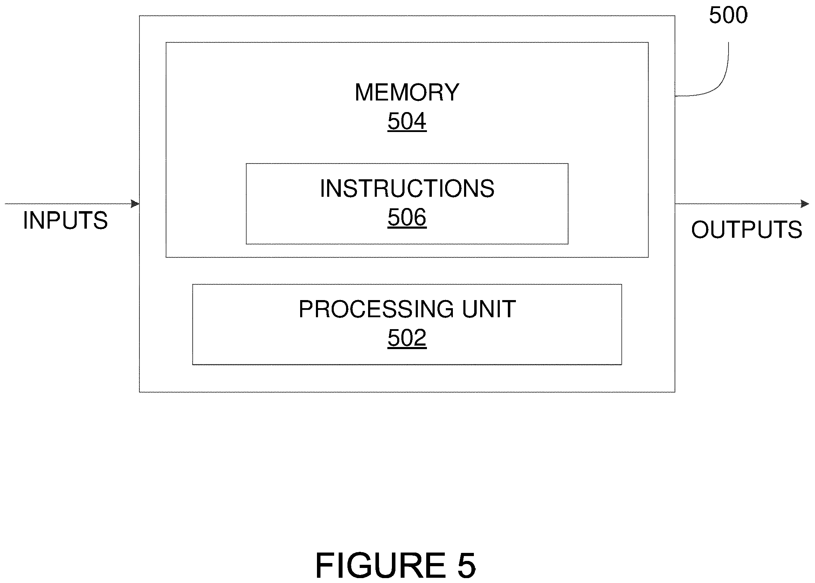

Figure 5 is an example embodiment of a computing device 500 for implementing the PCS 200, and more particularly the engine controller 210, described above with reference to Figure 2. The computing device 500 comprises a processing unit 502 and a memory 504 which has stored therein computer-executable instructions 506. The processing unit 502 may comprise any suitable devices configured to cause a series of steps to be performed such that instructions 506, when executed by the computing device 500 or other programmable apparatus, may cause the functions/acts/steps specified in the method described herein to be executed. The processing unit 502 may comprise, for example, any type of general-purpose microprocessor or microcontroller, a digital signal processing (DSP) processor, a CPU, an integrated circuit, a field programmable gate array (FPGA), a reconfigurable processor, other suitably programmed or programmable logic circuits, or any combination thereof.

The memory 504 may comprise any suitable known or other machine-readable storage medium. The memory 504 may comprise non-transitory computer readable storage medium, for example, but not limited to, an electronic, magnetic, optical, electromagnetic, infrared, or semiconductor system, apparatus, or device, or any suitable combination of the foregoing. The memory 504 may include a suitable combination of any type of computer memory that is located either internally or externally to device, for example random-access memory (RAM), read-only memory (ROM), electro-optical memory, magneto-optical memory, erasable programmable read-only memory (EPROM), and electrically-erasable programmable read-only memory (EEPROM), Ferroelectric RAM (FRAM) or the like. Memory 504 may comprise any storage means (e.g., devices) suitable for retrievably storing machine-readable instructions 406 executable by processing unit 502.

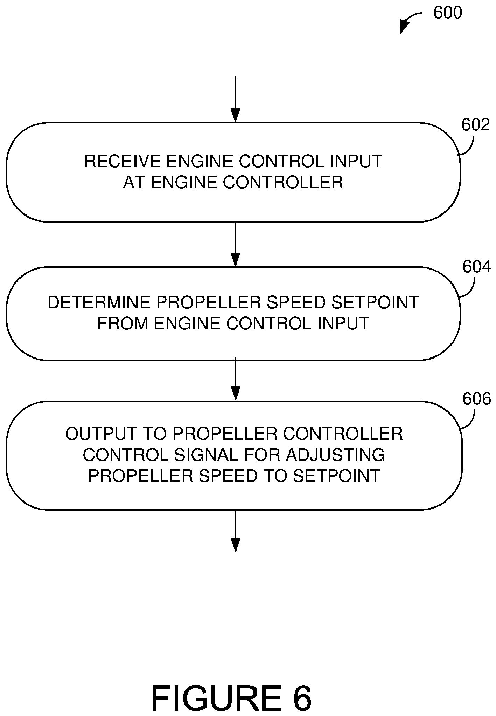

With reference to Figure 6, there is shown a flowchart illustrating an example method 600 for controlling a propeller-driven aircraft. The method 600 can be implemented at the engine controller (reference 210 in Figure 2). At step 602, at least one engine control input is received at the engine controller. In one embodiment, the engine control input corresponds to the lever position received from the throttle lever (reference 202 in Figure 2). In another embodiment, the engine control input corresponds to input received from cockpit controls (reference 204 in Figure 2), for example input received from a rating selection panel associated with the engine. At step 604, a setpoint for the propeller rotational speed is determined from the engine control input received at step 604. As discussed above, the governing setpoint can be derived from the lever position using a mapping of the propeller rotational governing speed as a function of the power lever position. The governing setpoint can alternatively be derived from the engine rating selection, using a mapping of the propeller rotational governing speed as a function of the engine rating selection. A control signal comprising instructions for adjusting the propeller rotational speed to the governing setpoint is then output by the engine controller to the propeller controller (reference 220 in Figure 2) at step 606.

The above description is meant to be exemplary only, and one skilled in the art will recognize that changes may be made to the embodiments described without departing from the scope of the invention disclosed. Still other modifications which fall within the scope of the present invention will be apparent to those skilled in the art, in light of a review of this disclosure.

Various aspects of the systems and methods described herein may be used alone, in combination, or in a variety of arrangements not specifically discussed in the embodiments described in the foregoing and is therefore not limited in its application to the details and arrangement of components set forth in the foregoing description or illustrated in the drawings. For example, aspects described in one embodiment may be combined in any manner with aspects described in other embodiments. Although particular embodiments have been shown and described, it will be apparent to those skilled in the art that changes and modifications may be made without departing from this invention in its broader aspects. The scope of the following claims should not be limited by the embodiments set forth in the examples, but should be given the broadest reasonable interpretation consistent with the description as a whole.

## Claims

1. A method for controlling a propeller-driven aircraft powered by at least one engine (110) having at least one propeller (120) associated therewith, the method comprising, at an engine controller (210) for the at least one engine (110):
receiving at least one control input for the at least one engine (110);
determining, based on the at least one control input, a setpoint for a rotational speed of the at least one propeller (120); and
outputting, to a propeller controller (220) for the at least one propeller (120), a control signal comprising instructions to adjust the rotational speed of the at least one propeller (120) to the setpoint.

2. The method of claim 1, wherein receiving the at least one control input comprises receiving a lever position for a throttle lever (202) associated with the at least one engine (110).

3. The method of claim 2, wherein the setpoint is determined from a mapping of the rotational speed of the at least one propeller (120) as a function of the lever position.

4. The method of any preceding claim, wherein receiving the at least one control input comprises receiving a power rating selection from a rating panel (402) associated with the at least one engine.

5. The method of claim 4, wherein the setpoint is determined from a mapping of the rotational speed of the at least one propeller (120) as a function of the power rating selection.

6. The method of any preceding claim, wherein the control signal is output to the propeller controller (220) as a synthesized control lever angle signal derived from the at least one control input.

7. A system for controlling a propeller-driven aircraft, powered by at least one engine (110) having at least one propeller (120) associated therewith, the system comprising:
a propeller controller (220) for the at least one propeller (120); and
an engine controller (210) for the at least one engine (110), the engine controller (210) comprising at least one processing unit (502) and at least one non-transitory computer-readable memory (504) having stored thereon program instructions (506) executable by the at least one processing unit (502) for:
receiving at least one control input for the at least one engine (110);
determining, based on the at least one control input, a setpoint for a rotational speed of the at least one propeller (120); and
outputting, to the propeller controller (220), a control signal comprising instructions to adjust the rotational speed of the at least one propeller (120) to the setpoint.

8. The system of claim 7, wherein the program instructions (506) are executable by the at least one processing unit (502) for receiving the at least one control input comprising receiving a lever position for a throttle lever (202) associated with the at least one engine (110).

9. The method of claim 8, wherein the program instructions (506) are executable by the at least one processing unit (502) for determining the setpoint from a mapping of the rotational speed of the at least one propeller (120) as a function of the lever position.

10. The system of claim 7, 8 or 9 wherein the program instructions (506) are executable by the at least one processing unit (502) for receiving the at least one control input comprising receiving a power rating selection from a rating panel (402) associated with the at least one engine (110).

11. The system of claim 10, wherein the program instructions (506) are executable by the at least one processing unit (502) for determining the setpoint from a mapping of the rotational speed of the at least one propeller (120) as a function of the power rating selection.

12. The system of any of claims 7 to 11, wherein the program instructions (506) are executable by the at least one processing unit (502) for outputting the control signal to the propeller controller (220) as a synthesized control lever angle signal derived from the at least one control input.

13. A non-transitory computer readable medium (504) having stored thereon program code (506) executable by at least one processor (502) for:
receiving, at an engine controller (210) for at least one engine (110) powering a propeller-driven aircraft, at least one control input for the at least one engine (110);
determining, at the engine controller (210), based on the at least one control input, a setpoint for a rotational speed of at least one propeller (120) associated with the at least one engine (110); and
outputting, at the engine controller (210), to a propeller controller (220) for the at least one propeller (120), a control signal comprising instructions to adjust the rotational speed of the at least one propeller (120) to the setpoint.
